# EUROPÄISCHE PATENTSCHRIFT

(11) **EP 1 447 953 B1**
(45) Veröffentlichungstag und Bekanntmachung des Hinweises auf die Patenterteilung: **19.01.2005**
(21) Anmeldenummer: 03290343.7
(22) Anmeldetag: 11.02.2003
(51) Int. Cl.: H04L 29/06

(54) **Gateway**
Gateway
Passerelle

(43) Veröffentlichungstag der Anmeldung: 18.08.2004
(73) Patentinhaber: ALCATEL, 75008 Paris (FR)
(72) Erfinder: Baeder, Rainer, 70771 Leinfelden (DE)
(74) Vertreter: Menzietti, Domenico, Dipl.-Ing

(56) Entgegenhaltungen:
- EP-A- 1 267 555
- WO-A-02/078303
- DE-A- 10 050 447
- US-B1- 6 512 761

## Beschreibung

Die Erfindung betrifft ein Gateway.

Bei der Übertragung von Sprache über das Internet, dem sogenannten VolP = Voice over Internet Protocol, wird zu übertragende Sprache eines rufenden Teilnehmers zunächst in einem mit dem Internet verbundenen Gateway in spezielle Sprachdatenpakete mit vorgegebener Paketlänge, z.B. 20 ms, aufgeteilt. Anschließend werden die Sprachdatenpakete u.a. mittels IP-Routern über das Internet bis zu einem Gateway übertragen, das dem angerufenen Teilnehmer örtlich am nächsten angeordnet ist. In diesem Gateway findet die Rückumsetzung der Sprachdatenpakete in Sprache statt. Unter Sprache werden hier alle Formen von Sprache außerhalb von IP subsumiert, so z.B. analoge Sprache in POTS, digitale Sprache in ISDN, DSL, PSTN, GSM, UMTS, mithin alle Arten von Sprache aus leitungsgebundenen oder drahtlosen Netzen; POTS = Plain Old Telephone system, ISDN = Integrated Services Digital Network, DSL = Digital Subscriber Line, Public Switched Telephone Network, GSM = Global System Mobil, UMTS = Universal Mobile Telecommunications System.

Es tritt das Problem auf, dass auf Übertragungsstrecken, die sehr belastet sind, der Durchsatz sehr gering ist, was bei der Sprachübertragung zu einer solchen Verschlechterung führen kann, dass die Sprachqualität inakzeptabel gering ist bzw. die Sprachverbindung ungewollt unterbrochen wird. Andererseits wird auf wenig belasteten Strecken, u.a. auf Grund der vorgegebenen, fixen Paketlänge, ein geringerer Durchsatz erzielt als möglich, d.h. es wird nur eine mittlere Sprachqualität erreicht obwohl eine bessere möglich wäre.

Das Problem wurde für unterschiedliche Dienste zum Teil durch die Einführung von Qualitätsstufen, dem sogenannten QoS = Quality of Service, gelöst. Diensten (=Services), bei denen eine hohe Priorität erforderlich ist und garantiert wird, z.B. bei VolP, wird eine vorgegebene, kurze Paketlänge zugeordnet, z.B. 30 ms. Diensten mit mittlerem Priorität, z.B. normale Datendienste, wird eine mittlere Paketlänge zugeordnet, z.B. 60 ms. Diensten mit einer geringen Priorität, z.B. Aufruf von Web-Seiten des Internets, wird eine lange Paketlänge zugeordnet, z.B. 90 ms. Dies bedeutet allerdings nur, dass Sprachdatenpakete gegenüber anderen Datenpaketen bevorzugt durchgeschaltet werden, wodurch ihr Durchsatz gegenüber den anderen Datenpaketen erhöht wird.

Zusätzlich wird in IP-Routern der Durchsatz von Datenpaketen dadurch optimiert, dass den Gateways Aufforderungen zur Reduzierung des zeitlichen Abstands zur Aussendung von Datenpaketen gesendet werden solange der mittlere Durchsatz unterhalb einer vorgegebenen Schwelle liegt. Wird die Schwelle überschritten, werden Aufforderungen zur Erhöhung des zeitlichen Abstands zur Aussendung von Datenpaketen gesendet. Diese adaptive Regelung betrifft somit den zeitlichen Abstand zwischen den Datenpaketen, während die Paketlänge unverändert konstant bleibt. Der zeitliche Abstand variiert somit je nach Datenaufkommen und aktuellem Durchsatz.

Aus der DE 100 50 447 ist ein packetoreintiertes Übertragungssytem bekannt, bei dem die Paketlängen je nach Anforderungen im System variable aber fest einstellbar sind.

Aufgabe der Erfindung ist es, die Sprachqualität bei der Übertragung von Sprache über das Internet zu verbessern.

Gelöst wird diese Aufgabe durch ein Gateway gemäß Patentanspruch 1.

Beim erfindungsgemäßen Gateway wird die Paketlänge von zu übertragenden Sprachdatenpaketen in Abhängigkeit von der örtlichen und/oder zeitlichen Entfernung des angerufenen Teilnehmers zum rufenden Teilnehmer variiert. Es werden verschiedene örtliche Bereiche, z.B. Ortsgespräch, Ferngespräch bis z.B. 100 km, Ferngespräch über 100 km oder Ortsgespräch (local call), nationales Gespräch (regional call), internationales Gespräch (long distance call) und/oder verschiedene zeitliche Bereiche, z.B. Zeitverzögerung 30 ms, 50 ms, 100 ms eingeführt. Unter der Voraussetzung, dass lokale Netze weniger belastet sind als globale, werden Sprachverbindungen im Ortsbereich lange Paketlängen zugewiesen, um die Bandbreitenausnutzung zu optimieren und dadurch die Sprachqualität zu erhöhen, und Sprachverbindungen für weite Entfernungen, wo auf der langen Übertragungsstrecke verstärkt Störungen auftreten können, kurze Paketlängen zugewiesen, wodurch sich der Durchsatz der Sprachdatenpakete erhöht und sich somit ebenfalls die Sprachqualität erhöht. Zeitliche Verzögerungen eines Sprachdatenpakets bis 150 ms können mittels Echo-Cancellern noch derart kompensiert werden, dass eine guten Sprachqualität vorliegt. Wird eine zeitliche Verzögerung eines Sprachdatenpakets von einem rufenden zu einem angerufenen Teilnehmer ermittelt, die unter 30 ms beträgt, so können Paketlängen bis zu 120 ms verwendet werden. Wird allerdings ein Verzögerung von 70 ms ermittelt, so können nur Paketlängen von bis zu 80 ms verwendet werden.

Vorteilhafte Ausgestaltungen der Erfindung sind den abhängigen Patentansprüchen und der nachfolgenden Beschreibung zu entnehmen.

Im folgenden wird die Erfindung anhand von mehreren Ausführungsbeispielen erläutert.

Alle Ausführungsbeispiele betreffen die Übertragung von Sprache über das Internet, das sogenannte VolP. Dabei dient jeweils ein Gateway als Schnittstelle zwischen einem Nicht-IP-Netz und dem IP-Netz. Mehrere Gateways werden von einem Gateway Controller gesteuert.

Ein Gateway beinhaltet beispielsweise eine Vielzahl von Packet Switches, TDM Switches, DSPs, CPUs, etc.; TDM = Time Division Multiplex. Es dient u.a. der Protokollanpassung, dem Routen, der Sprachverarbeitung, dem Mappen, dem Schalten, dem Ressourcen Management, usw. Ein Gateway wird u.a. auch als Voice Gateway, Trunk Gateway, Media Gateway bezeichnet und ist u.U. auch als Steckkarte in einem DSLAM integriert; DSLAM = Digital Subscriber Line Access Multiplexer.

Ein Gateway Controller, u.a. als Softswitch bezeichnet, beinhaltet beispielsweise eine Vielzahl von DSPs, CPUs, Speichern, etc. Er dient u.a. der Signalisierungsverarbeitung, dem Call Handling, dem Connection Handling, dem Ressourcen Management, usw.

Gateway Controller und Gateways sind miteinander verbunden, sie übertragen Informationen über ein spezielles Protokoll, z.B. das H.248. Der Gateway Controller übermittelt den Gateways u.a. die Verbindungsinformationen, die Angaben enthalten, welcher Eingangsport mit welchem Ausgangsport verbunden werden muss, um einen rufenden Teilnehmer mit dem gewünschten angerufenen Teilnehmer zu verbinden und so die Sprachverbindung entstehen zu lassen.

Beim ersten Ausführungsbeispiel beinhaltet das erfindungsgemäße Gateway zur Bereitstellung von Sprachdatenpaketen zur Übertragung von Sprache über das Internet ein Modul, dass derart ausgestaltet ist, für verschiedene Sprach-Verbindungen Sprachdatenpakete mit verschiedenen Paketlängen zu erzeugen, wobei die Paketlängen in Abhängigkeit von der örtlichen Entfernung des angerufenen Teilnehmers zum rufenden Teilnehmer ausgewählt sind.

Im zugehörigen Gateway Controller zur Durchführung der Signalisierung von Sprach-Verbindungen und zur Ansteuerung von mindestens zwei Gateways ist ein Modul vorgesehen, dass derart ausgestaltet ist, aus der Rufnummer eines angerufenen Teilnehmers eine Kategorisierung hinsichtlich der örtlichen Entfernung des angerufenen Teilnehmers zum rufenden Teilnehmer durchzuführen und die Information darüber zu einem zugehörigen Gateway zu übertragen.

Das Modul im Gateway ist geeignet, die Information über die Kategorisierung hinsichtlich der örtlichen Entfernung des angerufenen Teilnehmers zum rufenden Teilnehmer vom Gateway Controller zu empfangen und aus dieser Information eine zugehörige Paketlänge zu ermitteln.

Alternativ ist im Gateway Controller ein Modul vorgesehen, dass derart ausgestaltet ist, aus der Rufnummer eines angerufenen Teilnehmers eine Kategorisierung hinsichtlich der örtlichen Entfernung des angerufenen Teilnehmers zum rufenden Teilnehmer durchzuführen, aus der Kategorisierung eine vorbestimmte Paketlänge für zu übertragende Sprachdatenpakete zu ermitteln und die Information darüber zu einem zugehörigen Gateway zu übertragen.

Das zugehörige erfindungsgemäße Verfahren zum Übertragen von Sprachdatenpaketen über das Internet ist dadurch gekennzeichnet, dass vor der Übertragung in mindestens einem Gateway für verschiedene Sprach-Verbindungen Sprachdatenpakete mit verschiedenen Paketlängen in Abhängigkeit von der örtlichen Entfernung der angerufenen Teilnehmers zum rufenden Teilnehmer erzeugt werden.

Im Gateway Controller wird somit zunächst aus der Rufnummer eines angerufenen Teilnehmers eine Kategorisierung hinsichtlich der örtlichen Entfernung des angerufenen Teilnehmers zum rufenden Teilnehmer durchgeführt. Dazu wird die Rufnummer des angerufenen Teilnehmers und gegebenenfalls die Rufnummer des rufenden Teilnehmers aus den Signalisierungsinformationen ermittelt und anhand der Vorwahl entschieden, ob es sich z.B. um einen local call, einen regional call oder einen long distance call handelt. Haben rufender und angerufener Teilnehmer die gleiche Vorwahl handelt es sich um einen local call. Sind die Vorwahlen unterschiedlich und beginnt die Vorwahl der angerufenen Teilnehmers mit ++, so handelt es sich um einen long distance call, wobei ++ länderspezifisch festgelegt ist und z.B. 00 sein kann. Handelt es sich weder um einen local call noch um einen long distance call, so liegt ein regional call vor, was zusätzlich dadurch überprüft werden kann, ob die Vorwahl des angerufenen Teilnehmers mit einem + beginnt, wobei + länderspezifisch festgelegt ist und z.B. 0 sein kann.

Anhand der Kategorisierung in local call, regional call, long distance call können im Gateway oder im Gateway Controller unterschiedliche Paketlängen zugeordnet werden. Für einen local call werden lange Paketlängen vergeben, für einen regional call mittlere Paketlängen und für einen long distance call kurze Paketlängen.

Ein weiteres Beispiel für eine Kategorisierung ist:
Vorwahl des rufenden Teilnehmers ++49 0711:
Vorwahl des angerufenen Teilnehmers:
   Kategorie 1: alle Vorwahlen + +49 0711,
   Kategorie 2: alle Vorwahlen ++49 071*, ++49 071**, wobei * = beliebige natürliche Zahl von 0 bis 9, ohne Kategorie 1 Vorwahlen,
   Kategorie 3: alle Vorwahlen ++49 07**, ++49 07***, wobei * = beliebige natürliche Zahl von 0 bis 9, ohne Kategorie 2 Vorwahlen,
   Kategorie 4: alle Vorwahlen + +49 06**, + +49 06***, + +49 08*, + +49 08**, ++49 08***, wobei * = beliebige natürliche Zahl von 0 bis 9,
   Kategorie 5: alle Vorwahlen ++49 0#**, ++49 0#***, wobei * = beliebige natürliche Zahl von 0 bis 9 und # = beliebige natürliche Zahl von 1 bis 9, ohne Kategorie 3 und 4 Vorwahlen,
   Kategorie 6: alle Vorwahlen in der EU ohne Deutschland,
   Kategorie 7: alle Vorwahlen in den USA,
   Kategorie 8: alle internationalen Vorwahlen ohne Kategorie 6 und 7.

Paketlängen, die der Kategorie 1 zugeordnet sind haben die größte Länge, z.B. 80 ms; Paketlängen, die der Kategorie 8 zugeordnet sind haben die kleinste Länge, z.B. 10 ms. Bei internationalen Gesprächen außerhalb der EU und den USA kann davon ausgegangen werden, dass auf dem langen Weg zum angerufenen Teilnehmer, die Möglichkeit, dass Störungen auftreten erhöht ist, so dass kurze Sprachdatenpakete eine höhere Chance haben ungestört zum angerufenen Teilnehmer zu gelangen als lange. Insofern werden für solche Verbindungen Sprachdatenpakete mit kurzen Paketlängen erzeugt. Gegebenenfalls sind Kategorie 1 und 2 Verbindungen keine VolP Verbindungen, sondern VoTDM Verbindungen, bei denen die Paketlänge durch die Zeitschlitze vorgegeben ist.

Beim zweiten Ausführungsbeispiel beinhaltet das erfindungsgemäße Gateway zur Bereitstellung von Sprachdatenpaketen zur Übertragung von Sprache über das Internet ein Modul, dass derart ausgestaltet ist, für verschiedene Sprach-Verbindungen Sprachdatenpakete mit verschiedenen Paketlängen zu erzeugen, wobei die Paketlängen in Abhängigkeit von der zeitlichen Entfernung des angerufenen Teilnehmers zum rufenden Teilnehmer ausgewählt sind.

Das Gateway beinhaltet ein weiteres Modul zur Ermittlung der zeitlichen Verzögerung einer Übertragung eines Sprachdatenpakets vom rufenden zum gerufenen Teilnehmer. Das Modul ist derart ausgestaltet, aus der zeitlichen Verzögerung eine Kategorisierung hinsichtlich der zeitlichen Entfernung des angerufenen Teilnehmers zum rufenden Teilnehmer zu ermitteln und aus dieser Information eine zugehörige Paketlänge zu ermitteln.

Die Ermittlung der zeitlichen Verzögerung erfolgt während des Betriebs einer Sprachverbindung und mit reellen Sprachdaten. Zunächst wird die Sprachverbindung mit kurze oder mittlere Paketlängen gestartet und nach erhalt der Information über die Ankunftszeitpunkte der Pakete die zeitliche Verzögerung ermittelt, eine Kategorisierung durchgeführt und eine zugeordnete Paketlänge ausgewählt und für die weitere Übertragung von Sprachdaten beibehalten.

Alternativ oder zusätzlich wird eine adaptive Regelung dergestalt durchgeführt, dass eine stetige on-line Messung der aktuellen zeitlichen Verzögerung von Sprachdatenpaketen durchgeführt wird und eine stetige Anpassung der Paketlängen der ausgesendeten Sprachdatenpakete an die aktuelle Verzögerung erfolgt. Wird die aktuelle Verzögerung z.B. aufgrund eines erhöhten Datenaufkommens vergrößert, so wird die Paketlänge der ausgesandten verkürzt. Wird wieder eine kürzere Verzögerung gemessen, kann die Paketlänge wieder vergrößert werden.

Beim dritten Ausführungsbeispiel ist ein Gateway wie im zweiten Ausführungsbeispiel vorgesehen mit dem Unterschied, dass das weiteres Modul derart ausgestaltet ist, ein kurzes, ein mittleres und ein langes Test-Sprachdatenpaket zu erzeugen, diese zum angerufenen Teilnehmer zu übertragen und die Sendezeitpunkte zu erfassen und von einem mit dem angerufenen Teilnehmer verbundenen Gateway eine Information über die zeitlichen Ankünfte der Test-Sprachdatenpakete zu empfangen, um jeweils aus der zeitlichen Differenz zwischen Sendezeitpunkt und zeitlicher Ankunft die zugehörige zeitliche Verzögerung zu ermitteln und aus diesen Verzögerungen eine zugehörige Paketlänge zu ermitteln.

Bei zeitliche Verzögerungen im Bereich von bis zu 150 ms für die Übertragung eines Sprachdatenpakets vom rufenden zum angerufenen Teilnehmer lässt sich die Sprachqualität mittels Echo Canceller soweit verbessern, dass eine gute Verständigung möglich ist. Wird nun vor der Übertragung von Sprachdaten getestet, wie die aktuellen Verhältnisse auf der tatsächlichen Verbindung sind, so kann für jede individuelle Sprachverbindung eine optimierte Paketlänge ausgewählt werden. Ergibt sich, das für mittlere und lange Testpakete die zeitliche Verzögerung jeweils bereits über 150 ms beträgt, so werden nur kurze Sprachdatenpakete übertragen. Ergibt sich, dass für lange Testpakete die zeitliche Verzögerung z.B. unter 30 ms beträgt, so werden lange Sprachdatenpakete übertragen.

Je kürzer die zeitliche Verzögerung, desto längere Sprachpakete werden ausgewählt. Die Summe aus Paketlänge und zeitlicher Verzögerung ist dabei in vorteilhafter Weise so zu wählen, dass sie unter 150 ms bleibt. Sprachübertragungen sind auch noch bei zeitlichen Verzögerungen bis 400 ms möglich, bedingen aber Einschränkungen in der Sprachqualität.

Alternativ zu der Ermittlung der zeitlichen Verzögerung mittels Speicherung von Sendezeitpunkten können die ausgesandten Testpakete auch mit Zeitstempeln, sogenannten time stamps, versehen werden. In einem zurückgesendeten Testpaket wird zusätzlich der Empfangszeitpunkt als time stamp eingefügt, so dass aus dem empfangenen Testpaket die Differenz der time stamps und damit die zeitliche Verzögerung unmittelbar ermittelbar ist. In einer weiteren Variante wird bereits vor Rücksendung des Testsignals die zeitliche Verzögerung im gateway des angerufenen Teilnehmers ermittelt und eine entsprechende Information darüber in das rückgesendete Testpaket eingefügt bzw. nur diese Information zum Gateway des rufenden Teilnehmers zurückgesendet. Zur Ermittlung der zeitlichen Verzögerung kann zudem das sogenannte network time protocol verwendet werden.

Beim allen Ausführungsbeispielen kann das Modul der Gateways zusätzlich derart ausgestaltet sein, bei Empfang einer Aufforderung zur Erhöhung des zeitlichen Abstands zur Aussendung von Sprachdatenpaketen über einen vorgegebenen Wert hinaus die Paketlängen der Sprachdatenpakete zu reduzieren. Bei erhöhtem Datenaufkommen wird ein IP-Router die angeschlossenen Gateways dazu auffordern, Datenpakete in längeren zeitlichen Abständen auszusenden. Zusätzlich kann der Durchsatz erhöht werden, wenn neben der Aussendung in längeren zeitlichen Abständen auch die Paketlängen verkürzt werden.

Bei allen Ausführungsbeispielen ist eine besonders vorteilhafte Implementierung des Gateways dadurch gekennzeichnet, dass das Modul als Hard- und Softwaremodul ausgebildet ist, das Zugriff auf mindestens einen Speicherbereich hat, in dem eine tabellarische Zuordnung von verschiedenen Parameterwerten und/oder -bereichen und zugehörigen Paketlängen abgespeichert ist, wobei ein Parameter ein Maß für die zeitliche und/oder örtliche Entfernung des angerufenen Teilnehmers zum rufenden Teilnehmer ist.

Bei einer vorteilhaften Ausgestaltung der Erfindung enthält die tabellarische Zuordnung für eine kurze zeitliche und/oder örtliche Entfernung eine lange Paketdauer, für eine mittlere zeitliche und/oder örtliche Entfernung eine mittlere Paketdauer und für eine lange zeitliche und/oder örtliche Entfernung eine kurze Paketdauer.

Die Ausführungsbeispiele sind entweder auf eine zeitliche oder örtliche Entfernung als Kriterium für die Auswahl der Paketlänge beschränkt. Alternativ kann auch eine Kombination von Ausführungsbeispielen erfolgen, so dass sowohl die örtliche als auch die zeitliche Entfernung als Kriterien in einem Gateway berücksichtigt werden. Dabei kann z.B. die zeitliche Entfernung gegenüber der örtlichen Entfernung als bevorzugtes Kriterium ausgewählt werden oder umgekehrt. In einer weiteren Variante werden stets beide Entfernungen als Kriterium herangezogen, so dass für die Auswahl der Paketlänge stets beide erfüllt sein müssen, d.h. es wird stets die kürzere von zwei möglichen Paketlängen gewählt.

Die einzelnen Ausführungsbeispiele können in Teilen auch miteinander kombiniert werden. So kann z.B. die adaptive Regelung der aktuellen Paketlänge (zweites Ausführungsbeispiel) auch im ersten oder dritten Ausführungsbeispiel verwendet werden.

Die Verwendung von Zahlen in den Ausführungsbeispielen ist beispielhaft. Zu verwendende Paketlängen können z.B. festgelegt sein durch a) n mal 5 ms, n = 1, 2, 3, 4, 5, ... oder b) m mal 30 ms, m = 1, 2, 3, ... oder c) o mal 10 ms, o = 1, 2, 3, 4, ... . Es ist nicht notwendig die zeitlichen Abstände äquidistant zu wählen. Beispielsweise erfolgt eine Einteilung in local calls gleich 70 ms Paketlänge, regional calls 25 ms Paketlänge und long distance calls 5 ms Paketlänge. Für eine Kategorie, z.B. local calls können auch mehrere Paketlängen zur Auswahl stehen, die dann z.B. im Hinblick auf die ermittelte zeitliche Verzögerung ausgewählt werden oder an das aktuelle Datenaufkommen während des Betriebs angepasst werden.

## Patentansprüche

1. Gateway zur Bereitstellung von Sprachdatenpaketen zur Übertragung von Sprache über das Internet, **dadurch gekennzeichnet, dass** ein Modul im Gateway vorgesehen ist, dass derart ausgestaltet ist, für verschiedene Sprach-Verbindungen Sprachdatenpakete mit verschiedenen Paketlängen zu erzeugen, wobei die Paketlängen in Abhängigkeit von der örtlichen und/oder zeitlichen Entfernung des angerufenen Teilnehmers zum rufenden Teilnehmer ausgewählt sind, **dadurch gekennzeichnet, dass** das Modul geeignet ist, eine Information über eine Kategorisierung hinsichtlich der örtlichen und/oder zeitlichen Entfernung des angerufenen Teilnehmers zum rufenden Teilnehmer von einem Gateway Controller zu empfangen und aus dieser Information eine zugehörige Paketlänge zu ermitteln.

2. Gateway gemäß Patentanspruch 1, **dadurch gekennzeichnet, dass** ein weiteres Modul im Gateway zur Ermittlung der zeitlichen Verzögerung einer Übertragung eines Sprachdatenpakets vom rufenden zum gerufenen Teilnehmer vorgesehen ist, und dass das Modul derart ausgestaltet ist, aus der zeitlichen Verzögerung eine Kategorisierung hinsichtlich der zeitlichen und/oder örtlichen Entfernung des angerufenen Teilnehmers zum rufenden Teilnehmer zu ermitteln und aus dieser Information eine zugehörige Paketlänge zu ermitteln.

3. Gateway gemäß Patentanspruch 2, **dadurch gekennzeichnet, dass** das weitere Modul derart ausgestaltet ist, ein kurzes, ein mittlere und ein langes Test-Sprachdatenpaket zu erzeugen, diese zum angerufenen Teilnehmer zu übertragen und die Sendezeitpunkte zu erfassen und von einem mit dem angerufenen Teilnehmer verbundenen Gateway eine Information über die zeitlichen Ankünfte der Test-Sprachdatenpakete zu empfangen, um jeweils aus der zeitlichen Differenz zwischen Sendezeitpunkt und zeitlicher Ankunft die zugehörige zeitliche Verzögerung zu ermitteln und aus diesen Verzögerungen eine zugehörige Paketlänge zu ermitteln.

4. Gateway gemäß Patentanspruch 1, **dadurch gekennzeichnet, dass** das Modul derart ausgestaltet ist, bei Empfang einer Aufforderung zur Erhöhung des zeitlichen Abstands zur Aussendung von Sprachdatenpaketen über einen vorgegebenen Wert hinaus die Paketlängen der Sprachdatenpakete zu reduzieren.

5. Gateway gemäß Patentanspruch 1, **dadurch gekennzeichnet, dass** das Modul als Hard- und Softwaremodul ausgebildet ist, das Zugriff auf mindestens einen Speicherbereich hat, in dem eine tabellarische Zuordnung von verschiedenen Parameterwerten und/oder -bereichen und zugehörigen Paketlängen abgespeichert ist, wobei ein Parameter ein Maß für die zeitliche und/oder örtliche Entfernung des angerufenen Teilnehmers zum rufenden Teilnehmer ist.

6. Gateway gemäß Patentanspruch 6, **dadurch gekennzeichnet, dass** die tabellarische Zuordnung für eine kurze zeitliche und/oder örtliche Entfernung eine lange Paketdauer enthält, für eine mittlere zeitliche und/oder örtliche Entfernung eine mittlere Paketdauer und für eine lange zeitliche und/oder örtliche Entfernung eine kurze Paketdauer.

7. Gateway Controller zur Durchführung der Signalisierung von Sprach-Verbindungen und zur Ansteuerung von mindestens zwei Gateways zur Bereitstellung von Sprachdatenpaketen zur Übertragung von Sprache über das Internet, **dadurch gekennzeichnet, dass** ein Modul im Gateway Controller vorgesehen ist, dass derart ausgestaltet ist, aus der Rufnummer eines angerufenen Teilnehmers eine Kategorisierung hinsichtlich der zeitlichen und/oder örtlichen Entfernung des angerufenen Teilnehmers zum rufenden Teilnehmer durchzuführen, die Information darüber zu einem zugehörigen Gateway zu übertragen und aus dieser Information eine zugehörige Paketlänge zu ermitteln.

8. Gateway Controller nach Anspruch 7 **dadurch gekennzeichnet, dass** das Modul derart ausgestaltet ist, aus der Kategorisierung eine vorbestimmte Paketlänge für zu übertragende Sprachdatenpakete zu ermitteln und die Information darüber zu einem zugehörigen Gateway zu übertragen.

9. Verfahren zum Übertragen von Sprachdatenpaketen über das Internet, **dadurch gekennzeichnet, dass** vor der Übertragung in mindestens einem Gateway für verschiedene Sprach-Verbindungen Sprachdatenpakete mit verschiedenen Paketlängen in Abhängigkeit von der zeitlichen und/oder örtlichen Entfernung der angerufenen Teilnehmers zum rufenden Teilnehmer erzeugt werden, wobei eine Information über eine Kategorisierung hinsichtlich der örtlichen und/oder zeitlichen Entfernung des angerufenen Teilnehmers zum rufenden Teilnehmer von einem Gateway Controller empfangen und aus dieser Information eine zugehörige Paketlänge ermittelt wird.

## Claims

1. Gateway for providing speech data packets for transmission of speech via the Internet, **characterized in that** a module which is in a form for generating speech data packets with different packet lengths for different speech connections is provided in the gateway, the packet lengths being selected depending on the spatial and/or temporal distance of the called subscriber to the calling subscriber, **characterized in that** the module is suitable for receiving, from a gateway controller, information about a categorisation regarding the spatial and/or temporal distance of the called subscriber to the calling subscriber, and for determining an appropriate packet length from this information.

2. Gateway according to Claim 1, **characterized in that** a further module to determine the time delay of a transmission of a speech data packet from the calling to the called subscriber is provided in the gateway, and that the module is in a form to determine, from the time delay, a categorisation regarding the temporal and/or spatial distance of the called subscriber to the calling subscriber, and to determine an appropriate packet length from this information.

3. Gateway according to Claim 2, **characterized in that** the further module is in a form to generate a short, a medium and a long test speech data packet, to transmit it to the called subscriber, to record the transmission times, and to receive from a gateway which is connected to the called subscriber information about the arrival times of the test speech data packets, so as to determine, from the time difference between the transmission time and arrival time, the associated time delay, and to determine, from these delays, an appropriate packet length.

4. Gateway according to Claim 1, **characterized in that** the module is in a form so that, when it receives a request to increase the time interval for transmitting speech data packets beyond a specified value, it reduces the packet lengths of the speech data packets.

5. Gateway according to Claim 1, **characterized in that** the module is in the form of a hardware and software module, which has access to at least one memory area, in which a tabular assignment of different parameter values and/or ranges and associated packet lengths is stored, one parameter being a measure for the temporal and/or spatial distance of the called subscriber to the calling subscriber.

6. Gateway according to Claim 6, **characterized in that** the tabular assignment for a short temporal and/or spatial distance contains a long packet duration, for a medium temporal and/or spatial distance it contains a medium packet duration, and for a long temporal and/or spatial distance it contains a short packet duration.

7. Gateway controller to carry out the signalling of speech connections and to control at least two gateways to provide speech data packets for transmission of speech via the Internet, **characterized in that** a module which is in a form to carry out, from the call number of a called subscriber, a categorisation regarding the temporal and/or spatial distance of the called subscriber to the calling subscriber, to transmit the information about it to an associated gateway, and to determine an appropriate packet length from this information, is provided in the gateway controller.

8. Gateway controller according to Claim 7, **characterized in that** the module is in a form to determine from the categorisation a predefined packet length for speech data packets to be transmitted, and to transmit the information about it to an associated gateway.

9. Method for transmitting speech data packets via the Internet, **characterized in that** before transmission, in at least one gateway, for different speech connections speech data packets with different packet lengths are generated, depending on the temporal and/or spatial distance of the called subscriber to the calling subscriber, information about the categorisation regarding the spatial and/or temporal distance of the called subscriber to the calling subscriber being received from a gateway controller, and an appropriate packet length being determined from this information.

## Revendications

1. Passerelle pour la mise à disposition de paquets de données de parole pour la transmission de parole par Internet, **caractérisée en ce qu'**il est prévu un module dans la passerelle qui est conçu de manière à générer pour différentes liaisons de phonie des paquets de données de parole avec différentes longueurs de paquet, les longueurs de paquet étant choisies en fonction de l'espacement en distance et/ou en temps de l'abonné appelé à l'abonné appelant, **caractérisée en ce que** le module est approprié pour recevoir une information sur une catégorisation concernant l'espacement en distance et/ou en temps de l'abonné appelé à l'abonné appelant d'un Gateway Controller et de déterminer à partir de cette information une longueur de paquet spécifique.

2. Passerelle selon la revendication 1, **caractérisée en ce qu'**un autre module dans la passerelle est prévu pour la détermination de la temporisation d'une transmission d'un paquet de données de parole de l'abonné appelant à l'abonné appelé et **en ce que** le module est conçu de manière à déterminer à partir de la temporisation une catégorisation concernant l'espacement en temps et/ou en distance de l'abonné appelé à l'abonné appelant et à déterminer à partir de cette information une longueur de paquet spécifique.

3. Passerelle selon la revendication 2, **caractérisée en ce que** l'autre module est conçu de manière à générer un paquet test de données de parole court, un autre moyen et un autre long, à les transmettre à l'abonné appelé, à enregistrer les heures d'émission et à recevoir d'une passerelle reliée à l'abonné appelé une information sur les heures d'arrivée des paquets test de données de parole, afin de déterminer la temporisation spécifique respectivement à partir de la différence dans le temps entre l'heure d'émission et l'heure d'arrivée et de déterminer à partir de ces temporisations une longueur de paquet spécifique.

4. Passerelle selon la revendication 1, **caractérisée en ce que** le module est conçu de manière à réduire les longueurs de paquet des paquets de données de parole en cas de réception d'une invitation à augmenter l'espacement en temps pour l'envoi de paquets de données de parole au-delà d'une valeur prédéterminée.

5. Passerelle selon la revendication 1, **caractérisée en ce que** le module est conçu comme module de hardware et de software, qui a accès à au moins une zone de mémoire dans laquelle est mémorisée une attribution sous forme de tableau de différentes valeurs et/ou plages de paramètres et de longueurs de paquet spécifiques, un paramètre étant une référence pour l'espacement en temps et/ou en distance de l'abonné appelé à l'abonné appelant.

6. Passerelle selon la revendication 1, **caractérisée en ce que** l'attribution sous forme de tableau contient une longue durée de paquet pour un espacement court en temps et/ou en distance, une durée de paquet moyenne pour un espacement moyen en temps et/ou en distance et une durée de paquet courte pour un espacement long en temps et/ou en distance.

7. Gateway Controller pour la mise en oeuvre de la signalisation de liaisons de phonie et pour l'amorçage d'au moins deux passerelles pour la mise à disposition de paquets de données de parole pour la transmission de parole par internet, **caractérisé en ce qu'**il est prévu un module dans le Gateway Controller qui est conçu de manière à effectuer à partir du numéro d'appel d'un abonné appelé une catégorisation par rapport à l'espacement en temps et/ou en distance de l'abonné appelé à l'abonné appelant et à transmettre l'information à ce sujet à une passerelle spécifique et à déterminer à partir de cette information une longueur de paquet spécifique.

8. Gateway Controller selon la revendication 7, **caractérisée en ce que** le module est conçu de manière à déterminer à partir de la catégorisation une longueur de paquet prédéfinie pour des paquets de données de parole à transmettre et à transmettre l'information à ce sujet à une passerelle spécifique.

9. Procédé pour la transmission de paquets de données de parole par Internet, **caractérisée en ce que**, avant la transmission, on génère dans au moins une passerelle pour différentes liaisons de phonie des paquets de données de parole avec différentes longueurs de paquet en fonction de l'espacement en temps et/ou en distance de l'abonné appelé à l'abonné appelant, une information sur une catégorisation par rapport à l'espacement en distance et/ou en temps de l'abonné appelé à l'abonné appelant étant reçue d'un Gateway Controller et une longueur de paquet spécifique étant déterminée à partir de cette information.
